# EUROPÄISCHE PATENTSCHRIFT

(11) **EP 4 489 992 B1**
(45) Veröffentlichungstag und Bekanntmachung des Hinweises auf die Patenterteilung: **27.08.2025**
(21) Anmeldenummer: 23704305.4
(22) Anmeldetag: 08.02.2023
(51) Int. Cl.: B60N 2/02, B60N 2/18, B60N 2/64, B60N 2/66, B60N 2/90

(54) **SITZVORRICHTUNG FÜR EIN NEIGEFAHRZEUG**
SEAT DEVICE FOR A TILTING VEHICLE
DISPOSITIF DE SIÈGE POUR UN VÉHICULE INCLINABLE

(30) Priorität: 07.03.2022 DE 102022105235
(43) Veröffentlichungstag der Anmeldung: 15.01.2025
(73) Patentinhaber: Bayerische Motoren Werke Aktiengesellschaft, 80809 München (DE)
(72) Erfinder: DIEHL, Helmut, 82431 Kochel (DE)
(86) Internationale Anmeldenummer: PCT/EP2023/053044
(87) Internationale Veröffentlichungsnummer: WO 2023/169761

(56) Entgegenhaltungen:
- CN-A- 113 635 820
- CN-A- 114 056 210
- DE-C1- 4 219 940

## Beschreibung

Die Erfindung betrifft eine Sitzvorrichtung für ein Neigefahrzeug mit mindestens einem Sitzkörper, der eine Sitzfläche umfasst, an der ein Benutzer des Neigefahrzeugs anordenbar ist, und der mit einer in eine Wirkrichtung wirkenden Kraft beaufschlagbar ist, wobei die Wirkrichtung quer zur Sitzfläche verläuft, mit mindestens einer Trägereinheit, die zumindest einen elastisch biegbaren und/oder verformbaren ersten Trägerabschnitt umfasst, an dem der Sitzkörper angeordnet ist, die mindestens einen starren und biegesteifen zweiten Trägerabschnitt umfasst und die mindestens einen zwischen erstem Trägerabschnitt und zweitem Trägerabschnitt angeordneten und parallel oder schräg zur Sitzfläche erstreckten Hohlraum umfasst, durch den der erste Trägerabschnitt und der zweite Trägerabschnitt berührungsfrei zueinander beabstandet sind und durch den ein elastisches Verformen des ersten Trägerabschnitts in Richtung Hohlraum freigegeben ist, und mit mindestens einer Einstelleinheit, die mindestens einen Einstellkörper umfasst, der im Hohlraum bewegbar angeordnet ist, durch den der erste Trägerabschnitt am zweiten Trägerabschnitt abgestützt ist, und der von einer ersten Stützstellung, in der der erste Trägerabschnitt eine erste Federrate umfasst, in eine zweite Stützstellung überführbar ist, in der der erste Trägerabschnitt eine bezüglich der ersten Federrate abweichende zweite Federrate umfasst.

Sitzvorrichtungen für Neigefahrzeuge sind in unterschiedlichen Ausführungsformen aus dem Stand der Technik bekannt. Diese können Einstelleinrichtungen umfassen, durch die eine Neigung der Sitzfläche der Sitzvorrichtung einstellbar ist. Hierbei wird die Sitzfläche der Sitzvorrichtung bezüglich ihrer Neigung zur Fahrtrichtung verändert.

Darüber hinaus ist es bekannt, dass eine Sitzvorrichtung in einer Werkstatt, beispielsweise durch Austausch einer Sitzbank der Sitzvorrichtung, bezüglich der Sitzhärte an einem Benutzer des Kraftfahrzeugs anpassbar ist.

Bei den bekannten Sitzvorrichtungen ist die Neigung über die gesamte Sitzfläche hin verändert oder die Sitzvorrichtung muss demontiert werden, um in einer Werkstatt nur bereichsweise verändert zu werden. Das Gleiche gilt für das Einstellen der Sitzhärte.

Gattungsgemäße Sitzvorrichtungen sind bekannt aus CN 113 635 820 A, CN 114 056 210 A und DE 42 19 940 C1.

Eine Aufgabe der Erfindung ist, eine Sitzvorrichtung für ein Kraftfahrzeug vorzuschlagen, bei der ein abschnittsweises Einstellen einer Neigung und/oder einer Sitzhärte der Sitzvorrichtung vereinfacht ist.

Diese Aufgabe wird bei einer eingangs genannten Sitzvorrichtung für ein Neigefahrzeug gelöst durch mindestens zwei Stützkörper, von denen mindestens zwei Stützkörper einzeln und unabhängig voneinander von der ersten Stützstellung in die zweite Stützstellung überführbar sind.

Dadurch, dass die Trägereinheit der Sitzvorrichtung einen ersten Trägerabschnitt umfasst, der elastisch biegbar ist, wirkt der erste Trägerabschnitt, der in Wirkrichtung wirkenden Kraft mit einer Federkraft entgegen. Dadurch, dass die Einstelleinheit mindestens einen Einstellkörper umfasst, der im Hohlraum bewegbar ist und mit dem in einer ersten Stützstellung eine erste Federrate des ersten Trägerabschnitts und in der zweiten Stützstellung eine zweite Federrate des ersten Trägerabschnitts einstellbar ist, ist über die veränderte Federrate eine veränderte Sitzhärte des die Sitzfläche umfassenden Sitzkörpers einstellbar.

Dadurch, dass die mindestens zwei Stützkörper unabhängig voneinander von der ersten Stützstellung in die zweite Stützstellung überführbar sind, ist eine Einstellbarkeit der Sitzvorrichtung erweitert. Solchenfalls können Bereiche mit veränderter Sitzhärte individueller angepasst werden.

Abhängig von der Position des Einstellkörpers ist solchenfalls auch eine Oberflächengeometrie des Sitzkörpers, insbesondere der Sitzfläche des Sitzkörpers einstellbar, insbesondere insofern, dass ein Nutzer des Neigefahrzeugs in Bereichen der Sitzfläche mit verringerter Federrate des ersten Trägerabschnitts weicher sitzt, also tiefer einsinkt, als in Bereichen mit erhöhter Federrate. Die Bereiche erhöhter Federrate können beispielsweise auf Höhe des Einstellkörpers oder in unmittelbarer Nähe des Einstellkörpers angeordnet sein.

Der starre und biegesteife zweite Trägerabschnitt der Trägereinheit kann ein starres und biegesteifes Material umfassen oder an einem starren und biegesteifen Rahmen des Neigefahrzeugs flächenhaft anliegend festgelegt sein. Solchenfalls kann auch der zweite Trägerabschnitt ein flexibles Material umfassen, wird jedoch durch den Rahmen des Neigefahrzeugs gegen ein Verformen festgelegt.

Der Einstellkörper kann im Hohlraum derart angeordnet sein, dass er stets am zweiten Trägerabschnitt berührend anliegt und zum ersten Trägerabschnitt beabstandet ist, wenn kein Nutzer des Neigefahrzeugs auf der Sitzvorrichtung sitzt. Darüber hinaus kann der Einstellkörper stets sowohl am ersten Trägerabschnitt als auch am zweiten Trägerabschnitt berührend anliegend angeordnet sein.

Die Wirkrichtung der Kraft kann parallel oder schräg zu einer Hochachse des Neigefahrzeugs verlaufen.

Unter einem Neigefahrzeug werden Fahrräder, Motorräder oder motorrad-ähnliche Kraftfahrzeuge, wie Motorroller, insbesondere zwei-, drei- oder vierrädrige Motorroller, Scooter, neigbare Trikes, Quads oder Dergleichen verstanden.

Bei einer Ausführungsform der Sitzvorrichtung ist vorgesehen, dass der mindestens eine Einstellkörper manuell oder automatisch von der ersten Stützstellung in die zweite Stützstellung und umgekehrt überführbar ist.

Wenn der mindestens eine Einstellkörper manuell von der ersten Stützstellung in die zweite Stützstellung und umgekehrt überführbar ist, kann die Sitzvorrichtung kostengünstig hergestellt und betrieben werden. Wenn der mindestens eine Einstellkörper automatisch von der ersten Stützstellung in die zweite Stützstellung und umgekehrt überführbar ist, ist ein Komfort der Sitzvorrichtung erhöht und eine Bedienung erleichtert.

Bei einer Weiterbildung letztgenannter Ausführungsform können in einer Steuereinheit der Sitzvorrichtung unterschiedliche Stützstellungen hinterlegt sein, die an einen einzelnen Benutzer des Neigefahrzeugs angepasst sind. Solchenfalls stellt sich die Sitzvorrichtung automatisch beim Betrieb des Neigefahrzeugs auf den jeweils ausgewählten Benutzer ein.

Darüber hinaus kann die Sitzvorrichtung durch die Steuereinheit automatisch angesteuert werden, um eine auf die Fahrsituation angepasste Neigung der Sitzfläche oder Härte der Sitzfläche einzustellen, beispielsweise, um einen Beschleunigungsvorgang oder einen Bremsvorgang zu unterstützen oder um von einem On-the-road Betrieb auf einen Offroad-Betrieb umzuschalten.

Darüber hinaus ist bei Ausführungsformen der Sitzvorrichtung vorgesehen, dass mindestens einer des mindestens einen Einstellkörpers durch eine Translationsbewegung in eine quer oder schräg zur Wirkrichtung verlaufende Überführungsrichtung von der ersten Stützstellung in die zweite Stützstellung überführbar ist und/oder dass mindestens einer des mindestens einen Einstellkörpers durch Rotation um eine zentrisch oder exzentrisch durch den Einstellkörper verlaufende Drehachse von der ersten Stützstellung in die zweite Stützstellung überführbar ist.

Wenn mindestens einer des mindestens einen Einstellkörpers durch eine Translationsbewegung in einer quer oder schräg zur Wirkrichtung verlaufende Überführungsrichtung von der ersten Stützstellung in die zweite Stützstellung überführbar ist, ist der mindestens eine Einstellkörper relativ bezüglich seiner Position im Hohlraum veränderbar.

Wenn mindestens einer des mindestens einen Einstellkörpers durch Rotation um eine zentrisch oder exzentrisch durch den Einstellkörper verlaufende Drehachse von der ersten Stützstellung in die zweite Stützstellung überführbar ist, ist die Position des Einstellkörpers bezüglich einer Längsachse des Neigefahrzeugs konstant. Der Einstellkörper kann, wenn er um eine zentrisch verlaufende Drehachse drehbar ist, einen elliptischen oder polygonen Querschnitt umfassen. Wenn der Einstellkörper um eine exzentrisch durch den Einstellkörper verlaufende Drehachse verläuft, kann der Einstellkörper zusätzlich zu einem elliptischen oder polygonen Querschnitt, auch einen kreisrunden Querschnitt umfassen.

Wenn der Einstellkörper durch eine Traslationsbewegung in eine quer oder schräg zur Wegrichtung verlaufende Überführungsrichtung bewegbar ist, kann die Überführungsrichtung parallel oder schräg zu einer Längsachse des Neigefahrzeugs verlaufen.

Wenn der Einstellkörper manuell von der ersten Stützstellung in die zweite Stützstellung und umgekehrt überführbar ist, erweist es sich als vorteilhaft, wenn der Hohlraum eine durchgehende Ausnehmung umfasst, die von einer Zugriffsrichtung, die quer zur Wirkrichtung und quer zur Überführungsrichtung des Einstellkörpers verläuft, von außen aus zugänglich ist.

Solchenfalls ist der Einstellkörper auf einfache Weise zugänglich. Der Hohlraum erstreckt sich solchenfalls parallel oder schräg zur Längsrichtung des Neigefahrzeugs und ist seitlich, also parallel oder schräg zur Querachse des Neigefahrzeugs von außen aus zugänglich.

Darüber hinaus ist durch das Ausbilden des Hohlraums als durchgehende Ausnehmung, die von außen aus zugänglich ist, ein einfaches Austauschen des mindestens einen Einstellkörpers ermöglicht.

Um die Neigung der Sitzfläche oder den Härtegrad der Sitzvorrichtung einstellen zu können, erweist es sich als vorteilhaft, wenn der mindestens eine Einstellkörper zumindest in Wirkrichtung der Kraft elastisch verformbar oder starr ausgebildet ist.

Wenn der Einstellkörper starr ausgebildet ist, dient er lediglich als Auflage für den ersten Trägerabschnitt, wodurch die Federrate des ersten Trägerabschnitts ausschließlich durch den ersten Trägerabschnitt bestimmt ist. Wenn der mindestens eine Einstellkörper selbst elastisch verformbar ist, bestimmt das Interagieren aus Einstellkörper und erstem Trägerabschnitt, die Federrate in der ersten Stützposition und in der zweiten Stützposition.

Darüber hinaus sind Ausführungsformen der Sitzvorrichtung denkbar, bei denen der mindestens eine Einstellkörper am ersten Trägerabschnitt und/oder am zweiten Trägerabschnitt linien- oder flächenhaft anliegt.

Die Einstellbarkeit einer Neigung der Sitzfläche oder die Einstellbarkeit eines Härtegrads des Sitzkörpers, lässt sich weiter einstellen, wenn mindestens zwei Stützkörper gemeinsam, insbesondere miteinander gekoppelt, von der ersten Stützstellung in die zweite Stützstellung überführbar sind .

Wenn die mindestens zwei Stützkörper gemeinsam von der ersten Stützstellung in die zweite Stützstellung überführbar sind, ist ein Einstellen der Sitzvorrichtung erleichtert.

Der erste Trägerabschnitt kann ein erstes Trägerelement umfassen, das als separierbares oder separates Bauteil zum als zweites Trägerelement ausbildbaren zweiten Trägerabschnitt ausgestaltet ist. Die Sitzvorrichtung lässt sich bauteilreduziert ausbilden, wenn der erste Trägerabschnitt und der zweite Trägerabschnitt ein gemeinsames einstückiges Bauteil bilden, insbesondere wenn die Trägereinheit ein Zweikomponenten Spritzgussteil umfasst.

Wenn die Trägereinheit ein Zweikomponenten Spritzgussteil umfasst, kann der erste Trägerabschnitt aus einem ersten Kunststoff gebildet sein, der entsprechend elastisch biegbar ist und der zweite Trägerabschnitt durch einen unelastischen, starren Kunststoff.

Darüber hinaus sind Ausführungsformen der Sitzvorrichtung denkbar, bei denen der Sitzkörper einen Polsterkörper oder ein Kunststoffteil umfasst.

Wenn der Sitzkörper einen Polsterkörper umfasst, umfasst der Polsterkörper durch seine Materialeigenschaften an sich schon eine gewisse Sitzhärte und Polsterung. Wenn der Sitzkörper ein Kunststoffteil umfasst, kann dieses beispielsweise elastisch ausgebildet sein, wodurch der Sitzkörper von sich aus eine gewisse Sitzhärte und Polsterung umfasst oder ein unelastisches Kunststoffteil, wodurch ausschließlich durch den ersten Trägerabschnitt eine Reduzierung der Sitzhärte erzielbar ist.

Schließlich sind Ausführungsformen der Sitzvorrichtung denkbar, bei denen der Sitzkörper und die Trägereinheit ein gemeinsames einstückiges Bauteil bilden, insbesondere ein Mehrkomponenten Spritzgussteil.

Wenn der Sitzkörper beispielsweise ein Kunststoffteil umfasst, kann die Sitzvorrichtung, insbesondere Sitzkörper und Trägereinheit, ein gemeinsames, einstückiges Bauteil bilden.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Sitzvorrichtung.

In der Zeichnung zeigt:

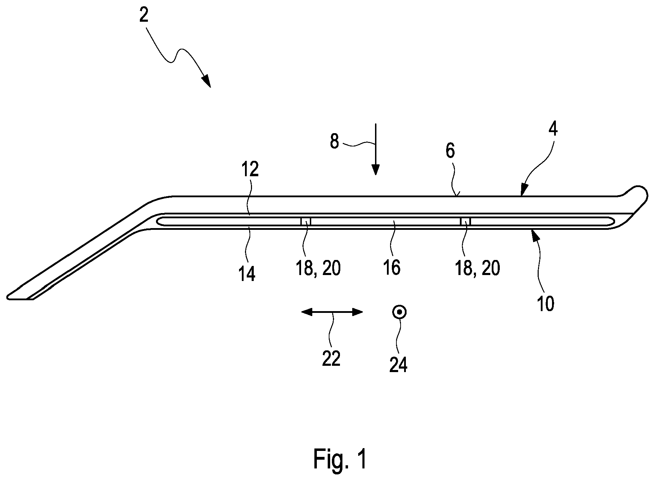

- Figur 1: Eine Seitenansicht auf ein Ausführungsbeispiel der Sitzvorrichtung.

Figur 1 zeigt eine insgesamt mit dem Bezugszeichen 2 versehene Sitzvorrichtung für ein Neigefahrzeug (in den Figuren nicht explizit dargestellt). Die Sitzvorrichtung 2 umfasst einen Sitzkörper 4, der eine Sitzfläche 6 aufweist. An der Sitzfläche 6 ist ein Benutzer des Neigefahrzeugs anordenbar. Durch das eigene Gewicht des Sitzkörpers 4 sowie durch das gegebenenfalls hinzukommende Gewicht eines oder mehrere Benutzer des Neigefahrzeugs, ist der Sitzkörper 4 mit einer in eine Wirkrichtung 8 wirkende Kraft beaufschlagbar.

Darüber hinaus umfasst die Sitzvorrichtung 2 eine Trägereinheit 10, die zumindest einen elastisch biegbaren und/oder verformbaren ersten Trägerabschnitt 12 umfasst, an dem der Sitzkörper 4 angeordnet ist. Darüber hinaus umfasst die Trägereinheit 10 einen im Wesentlichen starren und biegesteifen zweiten Trägerabschnitt 14. Zwischen dem ersten Trägerabschnitt 12 und dem zweiten Trägerabschnitt 14 erstreckt sich ein Hohlraum 16, durch den ein erster Trägerabschnitt 12 und ein zweiter Trägerabschnitt 14 zueinander beabstandet sind.

Die Sitzvorrichtung 2 umfasst zudem eine Einstelleinheit 18, die bei dem in den Figuren gezeigten Ausführungsbeispiel zwei Einstellkörper 20 umfasst. Die Einstellkörper 20 sind im Hohlraum 16 bewegbar angeordnet. An den Einstellkörpern 20 ist sowohl der erste Trägerabschnitt 12 als auch der zweite Trägerabschnitt 14 abgestützt. Die beiden Einstellkörper 20 sind von einer ersten Stützstellung, in der der erste Trägerabschnitt 12 eine erste Federrate umfasst, in eine zweite Stützstellung überführbar, in der der erste Trägerabschnitt 12 eine bezüglich der ersten Federrate abweichende zweite Federrate umfasst. Bei dem in Figur 1 ersichtlichen Ausführungsbeispiel können die beiden Einstellkörper 20 unabhängig voneinander angeordnet werden.

Figur 1 zeigt ein Ausführungsbeispiel der Sitzvorrichtung 2, bei dem die Einstellkörper 20 durch Translationsbewegung in eine quer zur Wirkrichtung 8 verlaufende Überführungsrichtung 22 von der ersten Stützstellung in die zweite Stützstellung überführbar sind.

Der Hohlraum 16 des in Figur 1 gezeigten Ausführungsbeispiels ist als durchgehende Ausnehmung ausgebildet, die von einer Zugriffsrichtung 24, die quer zur Wirkrichtung 8 und quer zur Überführungsrichtung 22 verläuft, von außen aus zugänglich ist.

Bei den in Figur 1 ersichtlichen Ausführungsbeispiel ist die Trägereinheit 10 als einstückiges Bauteil ausgebildet, insbesondere als Mehrkomponenten Spritzgussteil. Der erste Trägerabschnitt 12 ist hierbei durch einen ersten Kunststoff und der zweite Trägerabschnitt 14 durch einen zweiten Kunststoff gebildet.

### Bezugszeichenliste

- 2: Sitzvorrichtung
- 4: Sitzkörper
- 6: Sitzfläche
- 8: Wirkrichtung
- 10: Trägereinheit
- 12: erster Trägerabschnitt
- 14: zweiter Trägerabschnitt
- 16: Hohlraum
- 18: Einstelleinheit
- 20: Einstellkörper
- 22: Überführungsrichtung
- 24: Zugriffsrichtung

## Patentansprüche

1. Sitzvorrichtung (2) für ein Neigefahrzeug mit mindestens einem Sitzkörper (4), der eine Sitzfläche (6) umfasst, an der ein Benutzer des Neigefahrzeugs anordenbar ist, und der mit einer in eine Wirkrichtung (8) wirkenden Kraft beaufschlagbar ist, wobei die Wirkrichtung (8) quer zur Sitzfläche (6) verläuft, mit mindestens einer Trägereinheit (10), die zumindest einen elastisch biegbaren und/oder verformbaren ersten Trägerabschnitt (12) umfasst, an dem der Sitzkörper (4) angeordnet ist, die mindestens einen starren und biegesteifen zweiten Trägerabschnitt (14) umfasst und die mindestens einen zwischen erstem Trägerabschnitt (12) und zweitem Trägerabschnitt (14) angeordneten und parallel oder schräg zur Sitzfläche (6) erstreckten Hohlraum (16) umfasst, durch den der erste Trägerabschnitt (12) und der zweite Trägerabschnitt (14) berührungsfrei zueinander beabstandet sind und durch den ein elastisches Verformen des ersten Trägerabschnitts (12) in Richtung Hohlraum (16) freigegeben ist, und mit mindestens einer Einstelleinheit (18), die mindestens einen Einstellkörper (20) umfasst, der im Hohlraum (16) bewegbar angeordnet ist, durch den der erste Trägerabschnitt (12) am zweiten Trägerabschnitt (14) abgestützt ist, und der von einer ersten Stützstellung, in der der erste Trägerabschnitt (12) eine erste Federrate umfasst, in eine zweite Stützstellung überführbar ist, in der der erste Trägerabschnitt (12) eine bezüglich der ersten Federrate abweichende zweite Federrate umfasst, **gekennzeichnet durch** mindestens zwei Stützkörper, von denen mindestens zwei Stützkörper einzeln und unabhängig voneinander von der ersten Stützstellung in die zweite Stützstellung überführbar sind.

2. Sitzvorrichtung (2) nach Anspruch 1, **dadurch gekennzeichnet, dass** der mindestens eine Einstellkörper (20) manuell oder automatisch von der ersten Stützstellung in die zweite Stützstellung und umgekehrt überführbar ist.

3. Sitzvorrichtung (2) nach Anspruch 1 oder 2, **dadurch gekennzeichnet, dass** mindestens einer des mindestens einen Einstellkörpers (20) durch eine Translationsbewegung in eine quer oder schräg zur Wirkrichtung (8) verlaufende Überführungsrichtung (22) von der ersten Stützstellung in die zweite Stützstellung überführbar ist und/oder dass mindestens einer des mindestens einen Einstellkörpers (20) durch Rotation um eine zentrisch oder exzentrisch durch den Einstellkörper (20) verlaufende Drehachse von der ersten Stützstellung in die zweite Stützstellung überführbar ist.

4. Sitzvorrichtung (2) nach einem der vorhergehenden Ansprüche, **dadurch gekennzeichnet, dass** der Hohlraum (16) eine durchgehende Ausnehmung umfasst, die von einer Zugriffsrichtung (24), die quer zur Wirkrichtung (8) und quer zur Überführungsrichtung (22) des Einstellkörpers (20) verläuft, von außen aus zugänglich ist.

5. Sitzvorrichtung (2) nach einem der vorhergehenden Ansprüche, **dadurch gekennzeichnet, dass** der mindestens eine Einstellkörper (20) zumindest in Wirkrichtung (8) der Kraft elastisch verformbar oder starr ausgebildet ist.

6. Sitzvorrichtung (2) nach einem der vorhergehenden Ansprüche, **dadurch gekennzeichnet, dass** der mindestens eine Einstellkörper (20) am ersten Trägerabschnitt (12) und/oder am zweiten Trägerabschnitt (14) linien- oder flächenhaft anliegt.

7. Sitzvorrichtung (2) nach einem der vorhergehenden Ansprüche, **dadurch gekennzeichnet, dass** mindestens zwei Stützkörper gemeinsam, insbesondere miteinander gekoppelt, von der ersten Stützstellung in die zweite Stützstellung überführbar sind.

8. Sitzvorrichtung (2) nach einem der vorhergehenden Ansprüche, **dadurch gekennzeichnet, dass** der erste Trägerabschnitt (12) und der zweite Trägerabschnitt (14) ein gemeinsames einstückiges Bauteil bilden, insbesondere dass die Trägereinheit (10) ein Zweikomponenten Spritzgussteil umfasst.

9. Sitzvorrichtung (2) nach einem der vorhergehenden Ansprüche, **dadurch gekennzeichnet, dass** der Sitzkörper (4) einen Polsterkörper oder ein Kunststoffteil umfasst.

10. Sitzvorrichtung (2) nach einem der vorhergehenden Ansprüche, **dadurch gekennzeichnet, dass** der Sitzkörper (4) und die Trägereinheit (10) ein gemeinsames einstückiges Bauteil bilden, insbesondere ein Mehrkomponenten Spritzgussteil.

## Claims

1. Seat device (2) for a tilting vehicle with at least one seat body (4) comprising a seat surface (6) on which a user of the tilting vehicle can be arranged, and which can be subjected to a force acting in an action direction (8), wherein the action direction (8) runs transversely to the seat surface (6), with at least one carrier unit (10) comprising at least one elastically bendable and/or deformable first carrier section (12) on which the seat body (4) is arranged, comprising at least one rigid and bending-resistant second carrier section (14) and comprising at least one cavity (16) arranged between the first carrier section (12) and the second carrier section (14) and extending parallel or obliquely to the seat surface (6), through which the first carrier section (12) and the second carrier section (14) are spaced apart from each other without contact and through which an elastic deformation of the first carrier section (12) in the direction of the cavity (16) is released, and with at least one adjustment unit (18) comprising at least one adjustment body (20) which is movably arranged in the cavity (16), through which the first carrier section (12) is supported on the second carrier section (14), and which can be transferred from a first support position, in which the first carrier section (12) comprises a first spring rate, to a second support position, in which the first carrier section (12) comprises a second spring rate deviating from the first spring rate, **characterized by** at least two support bodies, of which at least two support bodies can be individually and independently transferred from the first support position to the second support position.

2. Seat device (2) according to claim 1, **characterized in that** the at least one adjustment body (20) can be transferred manually or automatically from the first support position to the second support position and vice versa.

3. Seat device (2) according to claim 1 or 2, **characterized in that** at least one of the at least one adjustment body (20) can be transferred from the first support position to the second support position by a translational movement in a transfer direction (22) running transversely or obliquely to the action direction (8) and/or that at least one of the at least one adjustment body (20) can be transferred from the first support position to the second support position by rotation about an axis of rotation running centrically or eccentrically through the adjustment body (20).

4. Seat device (2) according to one of the preceding claims, **characterized in that** the cavity (16) comprises a continuous recess which is accessible from the outside from an access direction (24) running transversely to the action direction (8) and transversely to the transfer direction (22) of the adjustment body (20).

5. Seat device (2) according to one of the preceding claims, **characterized in that** the at least one adjustment body (20) is elastically deformable or rigid at least in the action direction (8) of the force.

6. Seat device (2) according to one of the preceding claims, **characterized in that** the at least one adjustment body (20) is in linear or surface contact with the first carrier section (12) and/or the second carrier section (14).

7. Seat device (2) according to one of the preceding claims, **characterized in that** at least two support bodies can be transferred together, in particular coupled to each other, from the first support position to the second support position.

8. Seat device (2) according to one of the preceding claims, **characterized in that** the first carrier section (12) and the second carrier section (14) form a common one-piece component, in particular that the carrier unit (10) comprises a two-component injection molded part.

9. Seat device (2) according to one of the preceding claims, **characterized in that** the seat body (4) comprises a cushion body or a plastic part.

10. Seat device (2) according to one of the preceding claims, **characterized in that** the seat body (4) and the carrier unit (10) form a common one-piece component, in particular a multi-component injection molded part.

## Revendications

1. Dispositif de siège (2) pour un véhicule inclinable comprenant au moins un corps de siège (4) qui comprend une surface d'assise (6) sur laquelle un utilisateur du véhicule inclinable peut être disposé, et qui peut être soumis à une force agissant dans une direction d'action (8), la direction d'action (8) s'étendant transversalement à la surface d'assise (6), comprenant au moins une unité de support (10) qui comprend au moins une première section de support (12) élastiquement flexible et/ou déformable sur laquelle le corps de siège (4) est disposé, qui comprend au moins une deuxième section de support (14) rigide et résistante à la flexion et qui comprend au moins une cavité (16) disposée entre la première section de support (12) et la deuxième section de support (14) et s'étendant parallèlement ou obliquement à la surface d'assise (6), à travers laquelle la première section de support (12) et la deuxième section de support (14) sont espacées l'une de l'autre sans contact et à travers laquelle une déformation élastique de la première section de support (12) dans la direction de la cavité (16) est libérée, et comprenant au moins une unité de réglage (18) qui comprend au moins un corps de réglage (20) qui est disposé de manière mobile dans la cavité (16), à travers lequel la première section de support (12) est soutenue sur la deuxième section de support (14), et qui peut être transféré d'une première position de support, dans laquelle la première section de support (12) comprend un premier taux de ressort, à une deuxième position de support, dans laquelle la première section de support (12) comprend un deuxième taux de ressort différent du premier taux de ressort, **caractérisé par** au moins deux corps de support, dont au moins deux corps de support peuvent être transférés individuellement et indépendamment l'un de l'autre de la première position de support à la deuxième position de support.

2. Dispositif de siège (2) selon la revendication 1, **caractérisé en ce que** l'au moins un corps de réglage (20) peut être transféré manuellement ou automatiquement de la première position de support à la deuxième position de support et vice versa.

3. Dispositif de siège (2) selon la revendication 1 ou 2, **caractérisé en ce qu'**au moins un de l'au moins un corps de réglage (20) peut être transféré de la première position de support à la deuxième position de support par un mouvement de translation dans une direction de transfert (22) s'étendant transversalement ou obliquement à la direction d'action (8) et/ou **en ce qu'**au moins un de l'au moins un corps de réglage (20) peut être transféré de la première position de support à la deuxième position de support par rotation autour d'un axe de rotation passant de manière centrique ou excentrique à travers le corps de réglage (20).

4. Dispositif de siège (2) selon l'une des revendications précédentes, **caractérisé en ce que** la cavité (16) comprend un évidement continu qui est accessible de l'extérieur à partir d'une direction d'accès (24) s'étendant transversalement à la direction d'action (8) et transversalement à la direction de transfert (22) du corps de réglage (20).

5. Dispositif de siège (2) selon l'une des revendications précédentes, **caractérisé en ce que** l'au moins un corps de réglage (20) est élastiquement déformable ou rigide au moins dans la direction d'action (8) de la force.

6. Dispositif de siège (2) selon l'une des revendications précédentes, **caractérisé en ce que** l'au moins un corps de réglage (20) est en contact linéaire ou surfacique avec la première section de support (12) et/ou la deuxième section de support (14).

7. Dispositif de siège (2) selon l'une des revendications précédentes, **caractérisé en ce qu'**au moins deux corps de support peuvent être transférés ensemble, en particulier couplés l'un à l'autre, de la première position de support à la deuxième position de support.

8. Dispositif de siège (2) selon l'une des revendications précédentes, **caractérisé en ce que** la première section de support (12) et la deuxième section de support (14) forment un composant monobloc commun, en particulier **en ce que** l'unité de support (10) comprend une pièce moulée par injection à deux composants.

9. Dispositif de siège (2) selon l'une des revendications précédentes, **caractérisé en ce que** le corps de siège (4) comprend un corps de rembourrage ou une pièce en plastique.

10. Dispositif de siège (2) selon l'une des revendications précédentes, **caractérisé en ce que** le corps de siège (4) et l'unité de support (10) forment un composant monobloc commun, en particulier une pièce moulée par injection multi-composants.
